# EUROPÄISCHE PATENTSCHRIFT

(11) **EP 2 544 834 B1**
(45) Veröffentlichungstag und Bekanntmachung des Hinweises auf die Patenterteilung: **12.03.2014**
(21) Anmeldenummer: 11708828.6
(22) Anmeldetag: 14.03.2011
(51) Int. Cl.: B21C 47/24, B21C 47/32

(54) **VERFAHREN UND VORRICHTUNG ZUM ABLEGEN EINES METALLBUNDES**
METHOD AND DEVICE FOR DEPOSITING A METAL COIL
PROCÉDÉ ET DISPOSITIF POUR DÉPOSER UNE BOBINE MÉTALLIQUE

(30) Priorität: 10.12.2010 DE 102010062865; 27.08.2010 DE 102010035690; 12.03.2010 DE 102010011171
(43) Veröffentlichungstag der Anmeldung: 16.01.2013
(73) Patentinhaber: SMS Siemag AG, 40237 Düsseldorf (DE)
(72) Erfinder: CRAMER, Ulrich, 57439 Attendorn (DE); HOLZHAUER, Thomas, 57399 Kirchhundem (DE); FUCHS, Wolfgang, 57271 Hilchenbach (DE); KASTNER, Andreas, 57399 Kirchhundem (DE); MENGEL, Christian, 57074 Siegen (DE); MÜLLER, Heinz-Adolf, 57234 Wilnsdorf (DE); HEIDE, Carsten, 57250 Netphen (DE); HOFMANN, Karl, Robert, 57250 Netphen (DE)
(74) Vertreter: Klüppel, Walter
(86) Internationale Anmeldenummer: PCT/EP2011/053821
(87) Internationale Veröffentlichungsnummer: WO 2011/110695

(56) Entgegenhaltungen:
- JP-A- 6 047 438
- JP-A- 2010 005 631
- JP-A- 2010 253 483
- KR-A- 20030 026 479

## Beschreibung

Die Erfindung betrifft ein Verfahren zum Ablegen eines zu einem Metallbund aufgewickelten Metallbandes auf einem ersten und einem zweiten Auflagepunkt einer Vorrichtung und die Vorrichtung selber, zum Beispiel in Form eines Bundwagens.

### Stand der Technik

Bei der Produktion von konventionellen Warmbändern besteht ein Trend in der Produktion von Materialien mit hoher Festigkeit und großer Banddicke. Diese werden für die Herstellung von Röhrenstählen eingesetzt sowie für Verschleißflächen. Werden diese Materialien aufgewickelt verbleibt im Bund eine Restspannung, die das Bandende wieder öffnen will. Wird eine Grenze für die Restspannung überschritten, kann das Bund außermittig auf einem Bundwagen zu liegen kommen, sich selbst vom Bundwagen heben oder aufspringen (Uhrfedereffekt).

Im Stand der Technik sind verschiedene Vorrichtungen und Verfahren bekannt, die sich mit der stabilen Lagerung und Handhabung von aufgewickeltem Material mit höherer Restspannung beschäftigen.

In der Patentschrift WO/2006/111259 wird eine stationäre Vorrichtung zur Probennahme an Metallbunden diskutiert, bei der das Bund in einer stabilen Lage auf einer Bodenrolle und von mindestens einer Andrückrolle gehalten wird, wobei die sonst übliche ortsfeste zweite Bodenrolle von der Bundmantelfläche abgehoben wird, um eine prozesstechnisch günstige freie Bandlänge für die Probennahme zu erzeugen. Die Andrückrollen haben dabei einen Abstand von mehr als 90° zur ortsfesten Rolle. Im Weiteren beschäftigt sich diese Anmeldung mit den Vorrichtungen und dem Verfahren der Probennahme von Metallbunden.

In der nicht vorveröffentlichten Patentanmeldung DE 10 2009 060 257.7 wird eine Lagerung von Metallbunden auch zum Bundaustrag aus einem Haspel vorgeschlagen, bei der das Bund an mindestens 3 Auflagepunkten gehalten wird. Hier wird auch ein Auseinanderfahren von zwei Auflagern zur Aufnahme von Bunden unterschiedlicher Durchmesser vorgeschlagen. Nachteilig an dieser Lösung ist, dass immer drei Auflagepunkte vorhanden sind, egal ob sie für eine stabile Lagerung des Metallbundes im Einzelfall notwendig sind oder nicht. Die drei Auflagepunkte benötigen bei Metallbunden ohne hohe Restspannung unnötig viel Platz.

Die Japanische Patentanmeldung JP 60 47 438 A offenbart einen Bundwagen mit zwei Auflagepunkten zum Ablegen eines Metallbundes. Die Auflagepunkte sind höhenverstellbar auf dem Bundwagen angeordnet, aber zueinander ortsfest positioniert. Beide Auflagepunkte sind in Form einer Rolle ausgebildet, von denen eine über einen Motor und einen Kettenantrieb angetrieben werden kann.

Ausgehend von dem zuletzt genannten Stand der Technik liegt der Erfindung die Aufgabe zugrunde, ein Verfahren und eine Vorrichtung zum Ablegen eines Metallbundes auf zwei Auflagepunkten dahingehend weiterzubilden, dass das Metallbund sicherer gelagert werden kann.

Diese Aufgabe wird durch das in Patentanspruch 1 beanspruchte Verfahren gelöst. Dieses Verfahren ist gekennzeichnet durch folgende Schritte: Überprüfen und feststellen, ob das Metallbund in einer stabilen Gleichgewichtslage auf den beiden in einer Ausgangsposition relativ zueinander positionierten Auflagepunkten aufliegt oder aufliegen würde; wenn ja: Verändern der relativen Position der beiden Auflagepunkte zueinander derart, dass das Metallbund mindestens näherungsweise in einer stabilen Gleichgewichtslage auf den Auflagepunkten aufliegt oder aufliegen würde und Ablegen des Metallbundes auf den beiden Auflagepunkten mit geänderter Relativposition zueinander, sofern dies nicht bereits bei der Überprüfung der Gleichgewichtslage erfolgt war.

Der Begriff "instabile Gleichgewichtslage" bezeichnet im Rahmen der vorliegenden Erfindung verschiedene Risiken oder Instabilitäten, welche beim Handhaben und insbesondere beim Ablegen von Metallbunden mit hoher Restspannung auftreten können. Aufgrund der hohen Restspannung kann das Metallbund außermittig auf einem Bundwagen zum Liegen kommen und aufgrund des Uhrfedereffektes eigenständig aufspringen. Es besteht dann die Gefahr, dass das Bund sich selbst vom Wagen hebt und vom Wagen abfällt. Alle diese Effekte repräsentieren eine instabile Gleichgewichtslage des Metallbundes im Sinne der vorliegenden Beschreibung.

Das Verdienst der Erfindung liegt darin begründet, dass Möglichkeiten aufgezeigt werden, wie derartige problembehaftete Metallbunde erkannt werden können, um dann gegebenenfalls geeignete Maßnahmen treffen zu können, um eine sichere Ablage derartiger Metallbunde auf zwei Auflagepunkten zu gewährleisten. Konkret sieht die Erfindung vor, bei zuvor erkannten problembehafteten Metallbändern, die relative Position der beiden Auflagepunkte zueinander derart zu verändern, dass zumindest näherungsweise eine stabile Gleichgewichtslage des Metallbundes auf den Auflagepunkten gewährleistet wird. Die beanspruchte Maßnahme einer Veränderung einer relativen Position der beiden Auflagepunkte zueinander erfolgt nur, wenn zuvor erkannt wurde, dass ein problembehaftetes Metallband mit hoher Restspannung zur Ablage ansteht. Ansonsten bleiben die beiden Auflagepunkte in ihrer Ausgangsposition zueinander unverändert.

Die Überprüfung der besagten problematischen Eigenschaften des Metallbundes kann entweder erfolgen, wenn das Metallbund bereits auf den beiden Auflagepunkten aufliegt oder aber rein fiktiv, wenn das Metallbund aufliegenden würde. Aus diesem Grund wird im Anspruch 1 von "... aufliegt oder aufliegen würde" gesprochen. Ein konkretes Verständnis dieser Sachverhalte ergibt sich bei der späteren Diskussion der Ausführungsbeispiele.

Gemäß einem ersten Ausführungsbeispiel umfasst der Schritt des Überprüfens und Feststellens der Gleichgewichtslage folgende Teilschritte:
Überprüfen, ob folgende Bedingung erfüllt ist: ob der Durchmesser des Metallbundes kleiner als ein Durchmesser-Schwellenwert und die Dicke des Metallbandes größer als ein Dicken-Schwellenwert und die Festigkeit des Materials des Metallbandes größer als ein Festigkeits-Schwellenwert ist; und
Fingieren der Feststellung, dass das Metallbund in einer instabilen Gleichgewichtslage auf den beiden in der Ausgangsposition relativ zueinander positionierten Auflagepunkten aufliegen würde, wenn die Bedingung erfüllt ist.

Diese erste Möglichkeit der Überprüfung erfolgt vorteilhafterweise alleine durch Auswerten der genannten Kriterien des Metallbandes und Metallbundes. Das Metallbund muss für die Durchführung der Überprüfung nicht tatsächlich auf den beiden Auflagepunkten abgelegt sein. Es müssen keine aufwändigen Messungen an dem Metallbund selber oder an den Auflagepunkten vorgenommen werden. Die Kriterien können für typischerweise behandelte Materialien in einer Tabelle hinterlegt sein. Sie sind dann für einen Werker vor Ort für einzelne Metallbunde schnell abrufbar. Die instabile Gleichgewichtslage, für den Fall, dass das Metallbund auf den Auflagepunkten abgelegt wäre, wird prognostiziert bzw. vorhergesagt. Deshalb wird die besagte Feststellung der instabilen Gleichgewichtslage bei diesem Ausführungsbeispiel lediglich fingiert im Sinne von unterstellt oder angenommen oder vorhergesagt.

Vorteilhafterweise wird der Durchmesser-Schwellenwert vorgegeben zu 2200mm, der Dicken-Schwellenwert vorgegeben zu 5 m m und der Festigkeits-Schwellenwert, insbesondere für die Warmzugfestigkeit des Materials, vorgegeben zu 250*10⁶ N/m².

Die bei der ersten Möglichkeit zur Überprüfung der instabilen Gleichgewichtslage geprüfte Bedingung kann zusätzlich folgende Kriterien umfassen, nämlich, dass die Temperatur des Metallbundes beim Ablegen kleiner als ein vorgegebener Temperatur-Schwellenwert und die Warmstreckgrenze des Materials des Metallbandes größer als ein vorgegebener Streckgrenzen-Schwellenwert ist. Die Bedingung wäre dann nur erfüllt, wenn alle Kriterien, auch die Zusätzlichen, erfüllt sind. Dies hat den Vorteil, dass die in diesem Fall fingierte Feststellung einer instabilen Gleichgewichtslage zusätzlich abgesichert und damit belastbarer ist.

Vorteilhafterweise wird für die zusätzlichen Kriterien der Temperatur-Schwellenwert vorgegeben zu 600°C und der Streckgrenzen-Schwellenwert vorgegeben zu 250*10⁶ N/m².

Neben der ersten Möglichkeit besteht eine zweite Möglichkeit zum Überprüfen und Feststellen der Gleichgewichtslage. Diese zweite Möglichkeit umfasst folgende Teilschritte: Ablegen des Metallbundes auf den beiden Auflagepunkten, wenn diese in der Ausgangsposition relativ zueinander positioniert sind; Fällen des Lotes von der Mitte des Metallbundes hinunter zu den Auflagepunkten; Überprüfen, ob das Lot in die Mitte zwischen den beiden Auflagepunkten fällt; und Feststellen, dass das Metallbund in einer instabilen Gleichgewichtslage auf den beiden Auflagepunkten aufliegt, wenn das Lot nicht zumindest in eine vorgegebene Lot-Toleranzschwelle um die Mitte zwischen den beiden Auflagepunkten fällt. Diese zweite Möglichkeit hat den Vorteil, dass sie ohne teure und komplizierte Gerätschaften notfalls auch vom Werker vor Ort durchgeführt werden kann.

Die Lot-Toleranzschwelle kann beispielsweise auf +/- 10% des Durchmessers des Metallbundes bezogen auf die Mitte zwischen den Auflagepunkten festgelegt werden.

Neben der ersten und zweiten Möglichkeit besteht eine dritte Möglichkeit zum Überprüfen und Feststellen der Gleichgewichtslage. Diese dritte Möglichkeit umfasst folgende Teilschritte: Ablegen des Metallbundes auf den beiden Auflagepunkten, wenn diese in der Ausgangsposition relativ zueinander positioniert sind; Messen der von dem ersten Auflagepunkt aufgenommenen Kraftbelastung, Vergleichen der gemessenen Kraftbelastung mit dem Gesamtgewicht des Metallbundes; und Feststellen, dass das Metallbund in einer instabilen Gleichgewichtslage auf den beiden Auflagepunkten aufliegt, wenn die gemessene Kraftbelastung des ersten Auflagepunktes um mehr als eine vorgegebene Belastungs-Toleranzschwelle von dem halben Gesamtgewicht des Metallbundes abweicht. Diese dritte Möglichkeit benötigt, abgesehen von einer Prüfeinrichtung mit einer integrierten Auswerteeinrichtung für den Gewichtsvergleich, vorteilhafterweise lediglich eine Kraftmesseinrichtung an einem der beiden Auflagepunkte.

Neben der ersten, zweiten und dritten Möglichkeit besteht eine vierte Möglichkeit zum Überprüfen und Feststellen der Gleichgewichtslage. Diese vierte Möglichkeit umfasst folgende Teilschritte: Ablegen des Metallbundes auf den beiden Auflagepunkten, wenn diese in der Ausgangsposition relativ zueinander positioniert sind; Messen der von dem ersten und dem zweiten Auflagepunkt aufgenommenen Kraftbelastung, wenn das Metallbund auf den beiden Auflagepunkten aufliegt; Vergleichen der gemessenen Kraftbelastungen miteinander; und Feststellen, dass das Metallbund in einer instabilen Gleichgewichtslage auf den beiden Auflagepunkten aufliegt, wenn die gemessenen Kraftbelastungen pro Auflagepunkt um mehr als eine vorgegebene Belastungs-Toleranzschwelle voneinander abweichen.

Die Belastungs-Toleranzschwelle für einen der Auflagepunkte bei der dritten und vierten Möglichkeit wird vorzugsweise vorgegeben zu +/-25%, weiter vorzugsweise zu +/-10% oder noch weiter vorzugsweise zu +/-5% der Gewichtskraft des Metallbundes.

Typischerweise wird jeweils nur eine der aufgezeigten vier Möglichkeiten für die Überprüfung und Feststellung der Gleichgewichtslage verwendet; insofern sind es Alternativen. Allerdings können natürlich auch mehrere der Möglichkeiten bei einem Metallbund angewandt werden.

Vorzugsweise sind die beiden Auflagepunkte in der Ausgangsposition auf gleicher Höhe nebeneinander angeordnet sind.

Der Schritt der Veränderung der relativen Position der beiden Auflagepunkte zueinander kann erfolgen durch: Verändern des horizontalen und/oder vertikalen Abstandes der beiden Auflagepunkte zueinander. Alle Maßnahmen zur Veränderung der relativen Position der Auflagepunkte zielen immer auf eine Stabilisierung und Sicherung des abgelegten Metallbundes ab.

Bei der Veränderung der relativen Position kann der Auflagepunkt mit der anfänglich geringeren Kraftbelastung gegenüber dem Auflagepunkt mit der anfänglich größeren Kraftbelastung soweit abgesenkt werden, bis die stabile Gleichgewichtslage zumindest näherungsweise erreicht wird. Umgekehrt müsste der Auflagepunkt mit der anfänglich größeren Kraftbelastung gegenüber dem Auflagepunkt mit der anfänglich geringeren Kraftbelastung entsprechend weiter angehoben werden, um zu einer stabilen Gleichgewichtslage zu gelangen.

Der horizontale Abstand der beiden Auflagepunkte kann soweit vergrößert werden, bis die stabile Gleichgewichtslage zumindest näherungsweise erreicht wird. Dabei muss der horizontale Abstand jedoch immer kleiner gewählt werden, als der Durchmesser des Metallbundes, um ein Durchfallen des Metallbundes zwischen den beiden Auflagepunkten zu verhindern.

Für typische Metallbundgrößen sollte der horizontale Abstand zwischen den beiden Auflagepunkten nach der Veränderung des Abstandes im Bereich zwischen 300 und 1200 mm, vorzugsweise zwischen 650 und 1200 mm liegen.

Während oder nach der Veränderung der relativen Position der beiden Auflagepunkte zueinander sollte das zumindest näherungsweise Vorliegen/Erreichen des Zustandes des stabilen Gleichgewichtes vorteilhafterweise überprüft werden. Das Vorliegen des stabilen Gleichgewichtszustandes wird dann bestätigt, wenn das Gewicht des Metallbundes nach der Positionsänderung zumindest innerhalb der vorgegebenen Belastungs-Toleranzschwelle auf den beiden Auflagepunkten gleichverteilt ist oder wenn nach der Positionsänderung das Lot auf die Mitte zwischen die beiden Auflagepunkte fällt oder zumindest innerhalb der vorgegebenen Lot-Toleranzschwelle liegt.

Bei der Vorrichtung kann es sich um einen Bundwagen oder eine sonstige - auch ortsfeste - Ablage für das Metallbund handeln.

Das Verfahren kann manuell oder automatisch durchgeführt werden.

Die oben genannte Aufgabe wird weiterhin gelöst durch ein Verfahren gemäß Anspruch 10, eine Vorrichtung gemäß Anspruch 12 und einen Bundwagen gemäß Anspruch 19. Die Vorteile dieser Lösungen entsprechen - soweit gleiche Merkmale oder Merkmalskombinationen in Rede stehen - den oben erwähnten Vorteilen.

Die Erfindung wird weiterhin nachfolgend auf eine Reihe bevorzugter Ausführungsformen, die in den folgenden Abschnitten definiert sind, beschrieben.
1. Verfahren zum Ablegen eines zu einem Metallbund aufgewickelten Metallbandes auf einem ersten und einem zweiten Auflagepunkt einer Vorrichtung gekennzeichnet durch folgende Schritte:
   Überprüfen und Feststellen, ob das Metallbund in einer instabilen Gleichgewichtslage auf den beiden in einer Ausgangsposition relativ zueinander positionierten Auflagepunkten aufliegt oder aufliegen würde; wenn ja: Verändern der relativen Position der beiden Auflagepunkte zueinander derart, dass das Metallbund zumindest näherungsweise in einer stabilen Gleichgewichtslage auf den beiden Auflagepunkten aufliegt oder aufliegen würde; und
   Ablegen des Metallbundes auf den beiden Auflagepunkten mit geänderter Relativ-Position zueinander, sofern dies nicht bereits bei der Überprüfung der Gleichgewichtslage erfolgt war.
2. Verfahren nach Abschnitt 1,
   dadurch gekennzeichnet, dass
   der Schritt des Überprüfens und Feststellens der Gleichgewichtslage folgende Teilschritte umfasst:
   Überprüfen, ob folgende Bedingung erfüllt ist:
   der Durchmesser des Metallbundes kleiner als ein Durchmesser-Schwellenwert und die Dicke des Metallbandes größer als ein Dicken-Schwellenwert und die Festigkeit des Materials des Metallbandes größer als ein Festigkeits-Schwellenwert ist; und
   Fingieren der Feststellung, dass das Metallbund in einer instabilen Gleichgewichtslage auf den beiden in der Ausgangsposition relativ zueinander positionierten Auflagepunkten aufliegen würde, wenn die Bedingung erfüllt ist.
3. Verfahren nach Abschnitt 2,
   dadurch gekennzeichnet, dass
   der Durchmesser-Schwellenwert vorgegeben wird zu 2200mm;
   der Dicken-Schwellenwert vorgegeben wird zu 5mm; und
   der Festigkeits-Schwellenwert, insbesondere für die Warmzugfestigkeit des Materials, vorgegeben wird zu 250*10⁶ N/m².
4. Verfahren nach Abschnitt 2 oder 3,
   dadurch gekennzeichnet,
   dass die Bedingung zusätzlich folgende Kriterien umfasst: dass die Temperatur des Metallbundes kleiner als ein vorgegebener Temperatur-Schwellenwert und die Warmstreckgrenze des Materials des Metallbandes größer als ein vorgegebener Streckgrenzen-Schwellenwert ist; und Fingieren der Feststellung, dass das Metallbund in einer instabilen Gleichgewichtslage auf den beiden in der Ausgangsposition relativ zueinander positionierten Auflagepunkten aufliegen würde, wenn auch die zusätzlichen Kriterien erfüllt sind.
5. Verfahren nach Abschnitt 4,
   dadurch gekennzeichnet, dass
   der Temperatur-Schwellenwert vorgegeben wird zu 600°C; und
   der Streckgrenzen-Schwellenwert vorgegeben wird zu 250*10⁶ N/m².
6. Verfahren nach Abschnitt 1,
   dadurch gekennzeichnet, dass
   der Schritt des Überprüfens und Feststellens der Gleichgewichtslage folgende Teilschritte umfasst:
   Ablegen des Metallbundes auf den beiden Auflagepunkten, wenn diese in der Ausgangsposition relativ zueinander positioniert sind;
   Fällen des Lotes von der Mitte des Metallbundes hinunter zu den Auflagepunkten;
   Überprüfen, ob das Lot in die Mitte zwischen den beiden Auflagepunkten fällt; und
   Feststellen, dass das Metallbund in einer instabilen Gleichgewichtslage auf den beiden Auflagepunkten aufliegt, wenn das Lot nicht zumindest in eine vorgegebene Lot-Toleranzschwelle um die Mitte zwischen den beiden Auflagepunkten fällt.
7. Verfahren nach Abschnitt 6,
   dadurch gekennzeichnet, dass
   die Lot-Toleranzschwelle bei +/- 10% des Durchmessers des Metallbundes bezogen auf die Mitte zwischen den Auflagepunkten liegt.
8. Verfahren nach Abschnitt 1,
   dadurch gekennzeichnet, dass
   der Schritt des Überprüfens und Feststellens der Gleichgewichtslage folgende Teilschritte umfasst:
   Ablegen des Metallbundes auf den beiden Auflagepunkten, wenn diese in der Ausgangsposition relativ zueinander positioniert sind;
   Messen der von dem ersten Auflagepunkt aufgenommenen Kraftbelastung, wenn das Metallbund auf den beiden Auflagepunkten aufliegt;
   Vergleichen der gemessenen Kraftbelastung mit dem Gesamtgewicht des Metallbundes; und
   Feststellen, dass das Metallbund in einer instabilen Gleichgewichtslage auf den beiden Auflagepunkten aufliegt, wenn die gemessene Kraftbelastung des ersten Auflagepunktes um mehr als eine vorgegebene Belastungs-Toleranzschwelle von dem halben Gesamtgewicht des Metallbundes abweicht.
9. Verfahren nach Abschnitt 1,
   dadurch gekennzeichnet, dass
   der Schritt des Überprüfens und des Feststellens der Gleichgewichtslage folgende Teilschritte umfasst:
   Ablegen des Metallbundes auf den beiden Auflagepunkten, wenn diese in der Ausgangsposition relativ zueinander positioniert sind;
   Messen der von dem ersten und dem zweiten Auflagepunkt aufgenommenen Kraftbelastung, wenn das Metallbund auf den beiden Auflagepunkten aufliegt;
   Vergleichen der gemessenen Kraftbelastungen miteinander; und Feststellen, dass das Metallbund in einer instabilen Gleichgewichtslage auf den beiden Auflagepunkten aufliegt, wenn die gemessenen Kraftbelastungen pro Auflagepunkt um mehr als eine vorgegebene Belastungs-Toleranzschwelle voneinander abweichen.
10. Verfahren nach einem der Abschnitt 8 oder 9,
   dadurch gekennzeichnet, dass
   die Belastungs-Toleranzschwelle für einen der Auflagepunkte vorgegeben ist vorzugsweise zu +/-25%, weiter vorzugsweise zu +/-10% oder noch weiter vorzugsweise zu +/-5%, der Gewichtskraft des Metallbundes.
11. Verfahren nach einem der vorangegangenen Abschnitte,
   dadurch gekennzeichnet, dass
   die beiden Auflagepunkte in der Ausgangsposition auf gleicher Höhe nebeneinander angeordnet sind.
12. Verfahren nach einem der vorangegangenen Abschnitte,
   dadurch gekennzeichnet, dass
   der Schritt der Veränderung der relativen Position der beiden Auflagepunkte zueinander Folgendes umfasst:
   Verändern des horizontalen und/oder vertikalen Abstandes der beiden Auflagepunkte zueinander.
13. Verfahren nach Abschnitt 12,
   dadurch gekennzeichnet, dass
   der Auflagepunkt mit der anfänglich geringeren Kraftbelastung gegenüber dem Auflagepunkt mit der anfänglich größeren Kraftbelastung soweit abgesenkt wird, oder umgekehrt, bis die stabile Gleichgewichtslage zumindest näherungsweise erreicht wird.
14. Verfahren nach Abschnitt 12 oder 13,
   dadurch gekennzeichnet, dass
   der horizontale Abstand der beiden Auflagepunkte soweit vergrößert wird, bis die stabile Gleichgewichtslage zumindest näherungsweise erreicht wird, wobei der horizontale Abstand jedoch immer kleiner zu wählen ist, als der Durchmesser des Metallbundes.
15. Verfahren nach Abschnitt 14,
   dadurch gekennzeichnet, dass
   der horizontale Abstand zwischen den beiden Auflagepunkte nach der Veränderung im Bereich zwischen 650 und 1200 mm liegt.
16. Verfahren nach einem der vorangegangenen Abschnitte,
   dadurch gekennzeichnet, dass
   während oder nach der Veränderung der relativen Position der beiden Auflagepunkte zueinander das zumindest näherungsweise Vorliegen des Zustandes des stabilen Gleichgewichtes überprüft wird; und
   das Vorliegen des stabilen Gleichgewichtes festgestellt wird, wenn das Gewicht des Metallbundes nach der Positionsänderung zumindest innerhalb der vorgegebenen Belastungs-Toleranzschwelle auf den beiden Auflagepunkte gleichverteilt ist oder wenn nach der Positionsänderung das Lot auf die Mitte zwischen die beiden Auflagepunkte fällt oder zumindest innerhalb der vorgegebenen Lot-Toleranzschwelle liegt.
17. Verfahren nach einem der vorangegangenen Abschnitte,
   dadurch gekennzeichnet, dass
   es sich bei der Vorrichtung um einen Bundwagen handelt.
18. Verfahren nach einem der vorangegangenen Abschnitte,
   dadurch gekennzeichnet, dass
   dass Verfahren manuell oder automatisch durchgeführt wird.
19. Verfahren zum Ablegen eines zu einem Metallbund aufgewickelten Metattbandes auf einem ersten und einem zweiten Auflagepunkt einer Vorrichtung, gekennzeichnet durch folgende Schritte:
   - Überprüfen, ob folgende Bedingung erfüllt ist:
      der Durchmesser des Metallbundes kleiner als ein vorgegebener Durchmesser-Schwellenwert und die Dicke des Metallbandes größer als ein vorgegebener Dicken-Schwellenwert und die Festigkeit des Materials des Metallbandes größer als ein vorgegebener Festigkeits-Schwellenwert ist; und wenn die Bedingung erfüllt ist:
   - Fingieren der Feststellung, dass das Metallbund in einer instabilen Gleichgewichtslage auf den beiden in der Ausgangsposition relativ zueinander positionierten Auflagepunkten aufliegen würde;
   - Verändern des horizontalen und/oder vertikalen Abstandes der beiden Auflagepunkte zueinander gegenüber deren Ausgangsposition derart, dass das Metallbund in einer stabilen Gleichgewichtslage auf den beiden Auflagepunkten aufliegen kann; und
      Ablegen des Metallbundes auf den beiden Auflagepunkten mit geänderter Relativ-Position zueinander, sofern dies nicht bereits zuvor erfolgt war.
20. Verfahren nach Abschnitt 19,
   dadurch gekennzeichnet, dass
   während oder nach der Veränderung der relativen Position der beiden Auflagepunkte zueinander überprüft wird, ob das Gewicht des Metallbundes gleichverteilt ist auf die beiden Auflagepunkte.
21. Verfahren nach Abschnitt 19 oder 20,
   dadurch gekennzeichnet, dass
   der horizontale Abstand zwischen den beiden Auflagepunkten nach der Veränderung im Bereich zwischen 400 und 1200 mm liegt
22. Verfahren nach einem der Abschnitte 19 bis 21, dadurch gekennzeichnet, dass es sich bei der Vorrichtung um einen Bundwagen handelt.
23. Vorrichtung mit
   einem ersten und einem zweiten Auflagepunkt zum Ablegen eines Metallbundes auf den beiden Auflagepunkten;
   dadurch gekennzeichnet,
   dass zumindest der erste Auflagepunkt in seiner Position relativ zu dem zweiten Auflagepunkt veränderbar an der Vorrichtung gelagert ist;
   eine Prüfeinrichtung vorgesehen ist zum Überprüfen und Feststellen, ob das Metallbund in einer stabilen Gleichgewichtslage auf den beiden Auflagepunkten aufliegt oder liegen würde; und
   dass eine Steuereinrichtung vorgesehen ist zum Verändern der relativen Position der beiden Auflagepunkte - wenn eine instabile Gleichgewichtslage festgestellt wurde - zueinander derart, dass das Metallbund zumindest näherungsweise in einer stabilen Gleichgewichtslage auf den beiden Auflagepunkten aufliegen kann.
24. Vorrichtung nach Abschnitt 23,
   dadurch gekennzeichnet, dass
   die Prüfeinrichtung ausgebildet ist, zu prüfen, ob folgende Bedingung erfüllt ist:
   der Durchmesser des Metallbundes ist kleiner als ein Durchmesser-Schwellenwert und die Dicke des Metallbandes ist größer als ein Dicken-Schwellenwert und die Festigkeit des Materials des Metallbandes ist größer als ein Festigkeits-Schwellenwert; und - wenn die Bedingung erfüllt ist - die Feststellung zu fingieren, dass das Metallbund in einer instabilen Gleichgewichtslage auf den beiden in der Ausgangsposition relativ zueinander positionierten Auflagepunkten aufliegen würde.
25. Vorrichtung nach Abschnitt 24,
   dadurch gekennzeichnet, dass
   der Durchmesser-Schwellenwert vorgegeben ist zu 2200mm;
   der Dicken-Schwellenwert vorgegeben ist zu 5mm; und
   der Festigkeits-Schwellenwert, insbesondere für die Warmzugfestigkeit des Materials, vorgegeben ist zu 250*10⁶ N/m².
26. Vorrichtung nach Abschnitt 24 oder 25,
   dadurch gekennzeichnet,
   dass die Prüfeinrichtung weiterhin ausgebildet ist, die folgenden Kriterien der Bedingung zusätzlich zu prüfen: ob die Temperatur des Metallbundes kleiner als ein vorgegebener Temperatur-Schwellenwert und ob die Warmstreckgrenze des Materials des Metallbandes größer als ein vorgegebener Streckgrenzen-Schwellenwert ist; und die Feststellung, dass das Metallbund in einer instabilen Gleichgewichtslage auf den beiden in der Ausgangsposition relativ zueinander positionierten Auflagepunkten aufliegen würde, nur dann zu fingieren, wenn auch die zusätzlichen Kriterien erfüllt sind.
27. Vorrichtung nach Abschnitt 26,
   dadurch gekennzeichnet, dass
   der Temperatur-Schwellenwert vorgegeben wird zu 600°C; und
   der Streckgrenzen-Schwellenwert vorgegeben wird zu 250*10⁶ N/m².
28. Vorrichtung nach Abschnitt 23,
   dadurch gekennzeichnet, dass
   die Prüfeinrichtung ausgebildet ist, folgende Schritte durchzuführen, wenn das Metallbund auf den beiden in der Ausgangsposition relativ zueinander positionierten Auflagepunkten abgelegt ist:
   Fällen des Lotes von der Mitte des Metallbundes hinunter zu den Auflagepunkten;
   Überprüfen, ob das Lot in die Mitte zwischen den beiden Auflagepunkten fällt; und
   Feststellen, dass das Metallbund in einer instabilen Gleichgewichtslage auf den beiden Auflagepunkten aufliegt, wenn das Lot nicht zumindest in eine vorgegebene Lot-Toleranzschwelle um die Mitte zwischen den beiden Auflagepunkten fällt.
29. Vorrichtung nach Abschnitt 28,
   dadurch gekennzeichnet, dass
   die Lot-Toleranzschwelle bei +/- 10% des Durchmessers des Metallbundes bezogen auf die Mitte zwischen den Auflagepunkten liegt.
30. Vorrichtung nach Abschnitt 23,
   dadurch gekennzeichnet, dass
   eine Kraftmesseinrichtung vorgesehen ist zum Messen der von dem ersten Auflagepunkt aufgenommenen Kraftbelastung, wenn das Metallbund auf den beiden Auflagepunkten aufliegt; und
   die Prüfeinrichtung ausgebildet ist zum Vergleichen der gemessenen Kraftbelastung mit dem Gesamtgewicht des Metallbundes und zum Feststellen, dass das Metallbund in einer instabilen Gleichgewichtslage auf den beiden Auflagepunkten aufliegt, wenn die gemessene Kraftbelastung des ersten Auflagepunktes um mehr als eine vorgegebene Belastungs-Toleranzschwelle von dem halben Gesamtgewicht des Metallbundes abweicht.
31. Vorrichtung nach Abschnitt 23,
   dadurch gekennzeichnet, dass
   zwei Kraftmesseinrichtungen vorgesehen sind zum Messen der von dem ersten und dem zweiten Auflagepunkt aufgenommenen Kraftbelastung, wenn das Metallbund auf den beiden Auflagepunkten aufliegt; und
   die Prüfeinrichtung ausgebildet ist zum Vergleichen der gemessenen Kraftbelastungen miteinander und zum Feststellen, dass das Metallbund in einer instabilen Gleichgewichtslage auf den beiden Auflagepunkten aufliegt, wenn die gemessenen Kraftbelastungen pro Auflagepunkt um mehr als eine vorgegebene Belastungs-Toleranzschwelle voneinander abweichen.
32. Vorrichtung nach Abschnitt 30 oder 31,
   dadurch gekennzeichnet, dass
   die Belastungs-Toleranzschwelle für einen der Auflagepunkte vorgegeben ist vorzugsweise zu +/-25%, weiter vorzugsweise zu +/-10% oder noch weiter vorzugsweise zu +/-5%, der Gewichtskraft des Metallbundes.
33. Vorrichtung nach einem der Abschnitte 23 bis 32,
   dadurch gekennzeichnet, dass
   die Prüfeinrichtung weiterhin ausgebildet ist, während oder nach der Veränderung der relativen Position der beiden Auflagepunkte zueinander das zumindest näherungsweise Vorliegen des Zustandes des stabilen Gleichgewichtes zu überprüfen und das Vorliegen des stabilen Gleichgewichtes festzustellen, wenn das Gewicht des Metallbundes nach der Positionsänderung zumindest innerhalb der vorgegebenen Belastungs-Toleranzgrenze auf die beiden Auflagepunkte gleichverteilt ist oder wenn nach der Positionsänderung das Lot auf die Mitte zwischen die beiden Auflagepunkte fällt oder zumindest innerhalb der vorgegebenen Lot-Toleranzschwelle liegt.
34. Vorrichtung nach einem der Abschnitte 28 bis 33,
   dadurch gekennzeichnet, dass
   die beiden Auflagepunkte in der Ausgangsposition auf gleicher Höhe nebeneinander angeordnet sind.
35. Vorrichtung nach einem der Abschnitte 23 bis 34,
   dadurch gekennzeichnet, dass
   die Steuereinrichtung ausgebildet ist, die relative Position der beiden Auflagepunkte zueinander zu verändern durch Verändern des horizontalen und/oder vertikalen Abstandes der beiden Auflagepunkte zueinander.
36. Vorrichtung nach Abschnitt 35,
   dadurch gekennzeichnet, dass
   die Steuereinrichtung ausgebildet ist, den Auflagepunkt mit der anfänglich geringeren Kraftbelastung gegenüber dem Auflagepunkt mit der anfänglich größeren Kraftbelastung soweit abzusenken, oder umgekehrt, bis die stabile Gleichgewichtslage zumindest näherungsweise erreicht ist.
37. Vorrichtung nach Abschnitt 35 oder 36,
   dadurch gekennzeichnet, dass
   die Steuereinrichtung ausgebildet ist, den horizontalen Abstand der beiden Auflagepunkte soweit zu vergrößern, die stabile Gleichgewichtslage zumindest näherungsweise erreicht wird, wobei der horizontale Abstand jedoch immer kleiner zu wählen ist, als der Durchmesser des Metallbundes.
38. Vorrichtung nach Abschnitt 37
   dadurch gekennzeichnet, dass
   der horizontale Abstand zwischen den beiden Auflagepunkte nach der Veränderung im Bereich zwischen 650 und 1200 mm liegt.
39. Vorrichtung nach einem der Abschnitte 23 bis 38,
   dadurch gekennzeichnet, dass
   dass der erste Auflagepunkt in Form einer Rolle oder einer anschwenkbaren Klappe ausgebildet ist.
40. Vorrichtung nach einem der Abschnitte 23 bis 39,
   dadurch gekennzeichnet, dass
   dass der zweite Auflagepunkt in Form einer Rolle oder einer anschwenkbaren Klappe ausgebildet ist.
41. Vorrichtung nach einem der Abschnitte 23 bis 40,
   dadurch gekennzeichnet, dass
   dass das Metallbund, wenn es auf der Vorrichtung abgelegt ist, ungebunden ist.
42. Vorrichtung nach einem der Abschnitte 23 bis 40,
   dadurch gekennzeichnet, dass
   dass es sich bei der Vorrichtung um einen Bundwagen handelt.
43. Bundwagen mit
   einem ersten und einem zweiten Auflagepunkt zum Ablegen eines zu einem Metallbund aufgewickelten Metallbandes auf den beiden Auflagepunkten so, dass das Ende des Metallbandes von dem Gewicht des Metallbundes gehalten wird;
   dadurch gekennzeichnet,
   dass zumindest der erste Auflagepunkt in seinem horizontalen und/oder vertikalen Abstand zu dem zweiten Auflagepunkt veränderbar ist;
   dass eine Prüfeinrichtung vorgesehen ist zum Überprüfen, ob folgende Bedingung erfüllt ist: der Durchmesser des Metallbundes ist kleiner als ein vorgegebener Durchmesser-Schwellenwert und die Dicke des Metallbandes ist größer als ein vorgegebener Dicken-Schwellenwert und die Festigkeit des Materials des Metallbandes ist größer als ein vorgegebener Festigkeits-Schwellenwert, und zum Fingieren der Feststellung, dass das Metallbund in einer instabilen Gleichgewichtslage auf den beiden in der Ausgangsposition relativ zueinander positionierten Auflagepunkten aufliegen würde, wenn die Bedingung erfüllt ist; und
   dass eine Steuereinrichtung vorgesehen ist zum Verändern des horizontalen und/oder vertikalen Abstandes der beiden Auflagepunkte zueinander, wenn die Bedingung erfüllt ist, derart, dass das Metallbund in einer stabilen Gleichgewichtslage auf den beiden Auflagepunkten aufliegen kann.
44. Bundwagen nach Abschnitt 43,
   dadurch gekennzeichnet, dass
   die Prüfeinrichtung ausgebildet ist, während oder nach der Veränderung der relativen Position der beiden Auflagepunkte zueinander, zu überprüfen, ob das Gewicht des Metallbundes gleichverteilt ist auf den beiden Auflagepunkten.
45.Bundwagen nach Abschnitt 43 oder 44,
   dadurch gekennzeichnet, dass
   der horizontale Abstand zwischen den beiden Auflagepunkten nach der Veränderung im Bereich zwischen 400 und 1200 mm liegt.

Weitere vorteilhafte Ausgestaltungen der Erfindung sind Gegenstand der abhängigen Ansprüche.

Der Beschreibung sind insgesamt drei Figuren beigefügt, wobei
- Figur 1: ein erstes Ausführungsbeispiel der Erfindung mit einer Veränderung des vertikalen Abstandes der beiden Auflagepunkte zueinander zeigt;
- Figur 2: ein zweiten Ausführungsbeispiel der Erfindung mit unterschiedlich ausgebildeten Auflagepunkten zeigt; und
- Figur 3: ein drittes Ausführungsbeispiel der Erfindung mit einer Veränderung des horizontalen Abstandes der beiden Auflagepunkte in Verbindung mit einer Kraftmessung zur Überprüfung der Stabilität bzw. der Instabilität der Gleichgewichtslage zeigt.

Die Erfindung wird nachfolgend unter Bezugnahme auf die genannten Figuren detailliert beschrieben. In allen Figuren sind gleiche technische Merkmale mit gleichen Bezugszeichen bezeichnet.

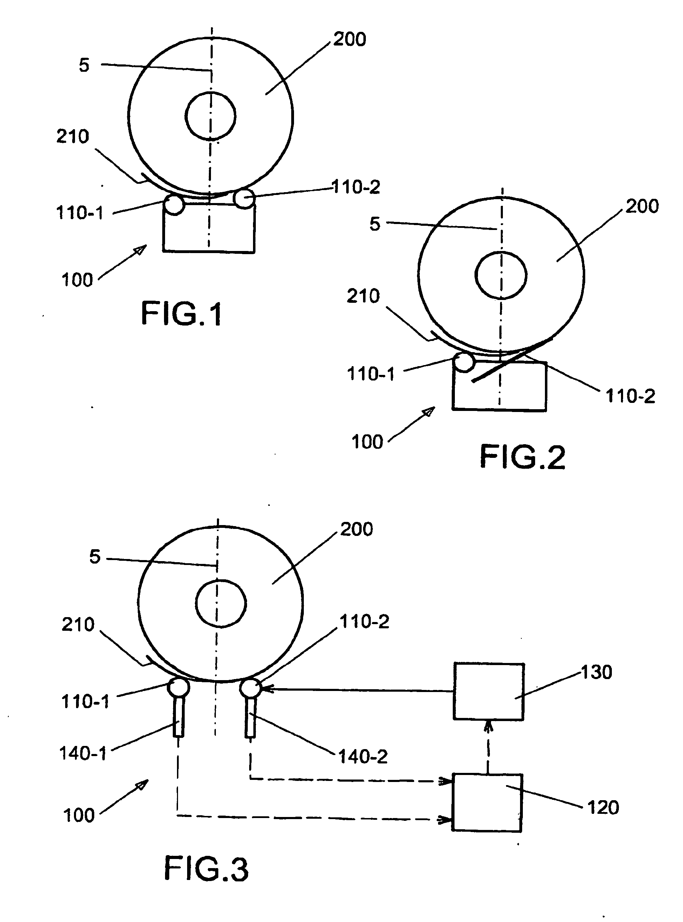

Figur 1 zeigt ein erstes Ausführungsbeispiel der Erfindung, wobei die Vorrichtung 100 zwei Aufnahmepunkte 110-1 und 110-2 in Form von vorzugsweise drehbar gelagerten Rollen aufweist. Ein Metallbund 200 ist derart auf den Rollen abgelegt, dass das Bandende 210 vom Gewicht des Metallbundes 200 gehalten wird.

Bereits bevor das Metallbund 200 auf den Auflagepunkten 110-1 und 110-2 abgelegt wurde, wurde erfindungsgemäß festgestellt, dass das Metallbund aufgrund seiner geometrischen und werkstofftechnischen Eigenschaften eine hohe Restspannung aufweist und deshalb zu Problemen, insbesondere zu einer instabilen Lage auf den beiden Auflagepunkten führen würde, wenn diese in ihrer typischen Ausgangssituation, bei welcher sie auf gleicher Höhe nebeneinander angeordnet sind, verbleiben würden.

Erfindungsgemäß ist mit dieser instabilen Gleichgewichtslage zu rechnen, wenn der Durchmesser des Metallbundes kleiner als ein Durchmesser - Schwellenwert von beispielsweise 2200 mm, und die Dicke des Metallbandes größer als ein Dicken-Schwellenwert von beispielsweise 5 mm und die Festigkeit des Materials des Metallbandes größer als ein Festigkeits - Schwellenwert von beispielsweise 250 mal 10⁶ N/m² ist. Eine noch größere Wahrscheinlichkeit für das Eintreten dieser instabilen Gleichgewichtslage besteht dann, wenn zusätzlich die Temperatur des Metallbundes, mit welcher das Metallbund auf die beiden Auflagepunkte abgelegt würde, kleiner als ein vorgegebener Temperatur - Schwellenwert von beispielsweise 600°C und die Warmstreckgrenze des Materials des Metallbandes größer als ein vorgegebener Streckgrenzen - Schwellenwert von beispielsweise 250 mal 10⁶ N/m² ist. Die Wahrscheinlichkeit für das Auftreten der Instabilität und die Stärke der Instabilität wachsen, je weiter die aufgezeigten Schwellenwerte über- bzw. unterschritten werden. Entsprechend größer muss die relative Veränderung der Positionierung der beiden Auflagepunkte zueinander vorgenommen werden, um trotz der erkannten Risikosituation eine stabile Ablage zu gewährleisten.

Für das in Figur 1 gezeigte erste Ausführungsbeispiel ist als Gegenmaßnahme der vertikale Abstand zwischen dem ersten Auflagepunkt 110-1 und dem zweiten Auflagepunkt 110-2 gegenüber der Ausgangssituation, bei welcher die beiden Auflagepunkte auf gleicher Höhe angeordnet waren, verändert. Es ist zu erkennen, dass in Figur 1 der linke Auflagepunkt 110-1 abgesenkt ist gegenüber dem rechten Auflagepunkt 110-2. Dies hat zur Folge, dass das Lot 5 ausgehend von der Mitte des Metallbundes in die Mitte zwischen den beiden Auflagepunkten 110-1 und 110-2 fällt. Durch die ergriffene Maßnahme, der Veränderung des vertikalen Abstandes der beiden Auflagepunkte zueinander ist das Metallbund 200 mittig auf den beiden Auflagepunkten zur Ablage gekommen; damit ist die gewünschte stabile Gleichgewichtslage erreicht.

Figur 2 zeigt ein zweites Ausführungsbeispiel der Erfindung, welches sich von dem in Figur 1 gezeigten ersten Ausführungsbeispiel lediglich dadurch unterscheidet, dass der zweite Auflagepunkt 110-2 nicht in Form einer Rolle, sondern in Form einer anschwenkbaren Klappe ausgebildet ist. Die Klappe kann mit fester oder variabler Neigung anstellbar ausgebildet sein. Grundsätzlich können die Auflagepunkte über ein Kipphebelsystem oder einer Keilverstellung an der Vorrichtung angelagert sein. Die Auflagepunkten repräsentieren Stellglieder, welche typischerweise elektrisch oder hydraulisch über eine Steuereinrichtung 130 angesteuert werden; siehe Figur 3.

In Figur 2 ist zu erkennen, dass der Kontaktpunkt in welchem die Klappe 110-2 den äußeren Umfang des Metallbundes 200 tangiert, höher liegt als der Kontaktpunkt zwischen dem linken Auflagepunkt 110-1 und dem Bandende 210. Auch bei dem Ausführungsbeispiel gemäß Figur 2 wurde deshalb das stabile Gleichgewicht durch eine Veränderung des vertikalen Abstandes der beiden Auflagepunkte bzw. deren Kontaktpunkte zum Metallbund 200 erreicht.

Figur 3 zeigt ein drittes Ausführungsbeispiel der Erfindung, bei welchem die beiden Auflagepunkte 110-1 und 110-2 auf gleicher Höhe nebeneinander angeordnet sind. Allerdings ist der horizontale Abstand a der beiden Auflagepunkte 110-1 und 110-2 variabel. Erfindungsgemäß wird er nach Maßgabe der festgestellten Instabilität des Metallbundes 200 so eingestellt, dass die anstrebte stabile Gleichgewichtslage erreicht wird.

Die stabile Gleichgewichtslage wird in Figur 3 ermittelt, in dem zunächst zwei Kraftmesseinrichtungen 140-1 und 140-2 vorgesehen sind, um die auf den zugeordneten Auflagepunkten 110-1 und 110-2 lastenden Anteile der Gewichtskraft des Metallbundes 200 zu ermitteln. Die Kraftmesseinrichtungen 140- 1und 140-2 übermitteln die gemessenen Kräfte in Form von elektronischen Signalen an eine Prüfeinrichtung 120, welche ausgebildet ist, die gemessenen Kraftanteile mit dem Gesamtgewicht des Metallbundes 200 zu vergleichen. Wenn die gemessenen Kraftbelastungen pro Auflagepunkt um mehr als eine vorgegebene Belastungstoleranzschwelle voneinander bzw. von dem halben Gewicht des Metallbundes 200 abweichen, stellt die Prüfeinrichtung das Risiko einer instabilen Gleichgewichtslage fest. Die Prüfeinrichtung 120 übermittelt diese Information vorzugsweise in quantifizierter Form an eine Steuereinrichtung 130, welche daraufhin zumindest einen der beiden Auflagepunkte 110-1, 110-2 so ansteuert, dass er seine relative Lage zu dem anderen Auflagepunkt geeignet ändert. Bei dem in Figur 3 gezeigten Ausführungsbeispiel besteht die geeignete Änderung darin, dass der horizontale Abstand a zwischen den beiden Auflagepunkten 110-1, 110-2 soweit vergrößert wird, bis die stabile Gleichgewichtslage mit einer gewünschten Genauigkeit erreicht ist.

Alternativ zu der in Figur 1 vorgestellten Möglichkeit zum Fällen des Lotes zum Detektieren der stabilen Gleichgewichtslage, kann diese auch durch Auswerten von Signalen der Kraftmesseinrichtungen überprüft werden. Die stabile Gleichgewichtslage ist dann erreicht, wenn auf den beiden Auflagepunkten 110-1 und 110-2 derselbe Anteil der Gewichtskraft des Metallbundes 200 lastet.

Das Gewicht des Metallbundes ist proportional zu dessen Durchmesser. Bei der oben aufgezeigten ersten Möglichkeit zum Überprüfen und Feststellen der Gleichgewichtslage kann deshalb alternativ oder zusätzlich zu dem Vergleich des Durchmessers des Metallbundes mit einem Durchmesser-Schwellenwert auch ein Vergleich des Bundegewichtes mit einem Bundgewicht-Schwellenwert erfolgen. Im Rahmen der Bedingung müsste dann neben den anderen genannten Kriterien das Gewicht des jeweiligen Metallbundes kleiner sein als der Bundgewicht-Schwellenwert, damit die Bedingung für eine hohe Restspannung insgesamt erfüllt ist. Der Schwellenwert liegt bei 30t. Dieses Kriterium des Gewichts-Vergleiches gilt für alle beanspruchten Verfahren und Vorrichtungen.

Die Überprüfung und Feststellung der Gleichgewichtslage kann nicht nur für Einzelbunde, sondern auch für Bundensembles erfolgen. Für das Bundensemble braucht die Überprüfung jeweils nur einmal durchgeführt zu werden, wenn es aus Bunden mit im Wesentlichen gleichen geometrischen, physikalischen und werkstofftechnischen Eigenschaften besteht.

## Patentansprüche

1. Verfahren zum Ablegen eines zu einem Metallbund (200) aufgewickelten Metallbandes auf einem ersten (110-1) und einem zweiten (110-2) Auflagepunkt einer Vorrichtung (100) **gekennzeichnet durch** folgende Schritte:
Überprüfen und Feststellen, ob das Metallbund (200) in einer instabilen Gleichgewichtslage auf den beiden in einer Ausgangsposition relativ zueinander positionierten Auflagepunkten (110-1; 110-2) aufliegt oder aufliegen würde;
wenn ja: Verändern der relativen Position der beiden Auflagepunkte (110-1; 110-2) zueinander derart, dass das Metallbund (200) zumindest näherungsweise in einer stabilen Gleichgewichtslage auf den beiden Auflagepunkten (110-1; 110-2) aufliegt oder aufliegen würde; und
Ablegen des Metallbundes (200) auf den beiden Auflagepunkten (110-1; 110-2) mit geänderter Relativ-Position zueinander, sofern dies nicht bereits bei der Überprüfung der Gleichgewichtslage erfolgt war.

2. Verfahren nach Anspruch 1,
**dadurch gekennzeichnet, dass**
der Schritt des Überprüfens und Feststellens der Gleichgewichtslage folgende Teilschritte umfasst:
Überprüfen, ob folgende Bedingung erfüllt ist:
der Durchmesser des Metallbundes (200) kleiner als ein Durchmesser-Schwellenwert und die Dicke des Metallbandes größer als ein Dicken-Schwellenwert und die Festigkeit des Materials des Metallbandes größer als ein Festigkeits-Schwellenwert ist; und
Fingieren der Feststellung, dass das Metallbund (200) in einer instabilen Gleichgewichtslage auf den beiden in der Ausgangsposition relativ zueinander positionierten Auflagepunkten (110-1; 110-2) aufliegen würde, wenn die Bedingung erfüllt ist.

3. Verfahren nach Anspruch 1,
**dadurch gekennzeichnet, dass**
der Schritt des Überprüfens und Feststellens der Gleichgewichtslage folgende Teilschritte umfasst:
Ablegen des Metallbundes (200) auf den beiden Auflagepunkten (110-1; 110-2), wenn diese in der Ausgangsposition relativ zueinander positioniert sind;
Fällen des Lotes (5) von der Mitte des Metallbundes (200) hinunter zu den Auflagepunkten (110-1; 110-2);
Überprüfen, ob das Lot (5) in die Mitte zwischen den beiden Auflagepunkten (110-1; 110-2) fällt; und
Feststellen, dass das Metallbund (200) in einer instabilen Gleichgewichtslage auf den beiden Auflagepunkten (110-1; 110-2) aufliegt, wenn das Lot (5) nicht zumindest in eine vorgegebene Lot-Toleranzschwelle um die Mitte zwischen den beiden Auflagepunkten fällt.

4. Verfahren nach Anspruch 1,
**dadurch gekennzeichnet, dass**
der Schritt des Überprüfens und Feststellens der Gleichgewichtslage folgende Teilschritte umfasst:
Ablegen des Metallbundes (200) auf den beiden Auflagepunkten (110-1; 110-2), wenn diese in der Ausgangsposition relativ zueinander positioniert sind;
Messen der von dem ersten Auflagepunkt (110-1) aufgenommenen Kraftbelastung, wenn das Metallbund (200) auf den beiden Auflagepunkten (110-1; 110-2) aufliegt;
Vergleichen der gemessenen Kraftbelastung mit dem Gesamtgewicht des Metallbundes (200), und
Feststellen, dass das Metallbund (200) in einer instabilen Gleichgewichtslage auf den beiden Auflagepunkten (110-1; 110-2) aufliegt, wenn die gemessene Kraftbelastung des ersten Auflagepunktes (110-1) um mehr als eine vorgegebene Belastungs-Toleranzschwelle von dem halben Gesamtgewicht des Metallbundes abweicht.

5. Verfahren nach Anspruch 1,
**dadurch gekennzeichnet, dass**
der Schritt des Überprüfens und des Feststellens der Gleichgewichtslage folgende Teilschritte umfasst:
Ablegen des Metallbundes (200) auf den beiden Auflagepunkten (110-1; 110-2), wenn diese in der Ausgangsposition relativ zueinander positioniert sind;
Messen der von dem ersten (110-1) und dem zweiten (110-2) Auflagepunkt aufgenommenen Kraftbelastung, wenn das Metallbund (200) auf den beiden Auflagepunkten (110-1; 110-2) aufliegt; Vergleichen der gemessenen Kraftbelastungen miteinander; und
Feststellen, dass das Metallbund (200) in einer instabilen Gleichgewichtslage auf den beiden Auflagepunkten (110-1; 110-2) aufliegt, wenn die gemessenen Kraftbelastungen pro Auflagepunkt um mehr als eine vorgegebene Belastungs-Toleranzschwelle voneinander abweichen.

6. Verfahren nach einem der vorangegangenen Ansprüche,
**dadurch gekennzeichnet, dass**
die beiden Auflagepunkte (110-1; 110-2) in der Ausgangsposition auf gleicher Höhe nebeneinander angeordnet sind.

7. Verfahren nach einem der vorangegangenen Ansprüche,
**dadurch gekennzeichnet, dass**
der Schritt der Veränderung der relativen Position der beiden Auflagepunkte (110-1; 110-2) zueinander Folgendes umfasst:
Verändern des horizontalen und/oder vertikalen Abstandes der beiden Auflagepunkte (110-1; 110-2) zueinander.

8. Verfahren nach einem der vorangegangenen Ansprüche,
**dadurch gekennzeichnet, dass**
während oder nach der Veränderung der relativen Position der beiden Auflagepunkte (110-1; 110-2) zueinander das zumindest näherungsweise Vorliegen des Zustandes des stabilen Gleichgewichtes überprüft wird; und
das Vorliegen des stabilen Gleichgewichtes festgestellt wird, wenn das Gewicht des Metallbundes (200) nach der Positionsänderung zumindest innerhalb der vorgegebenen Belastungs-Toleranzschwelle auf den beiden Auflagepunkten (110-1; 110-2) gleichverteilt ist oder wenn nach der Positionsänderung das Lot (5) auf die Mitte zwischen die beiden Auflagepunkte (110-1; 110-2) fällt oder zumindest innerhalb der vorgegebenen Lot-Toleranzschwelle liegt.

9. Verfahren nach einem der vorangegangenen Ansprüche,
**dadurch gekennzeichnet, dass**
es sich bei der Vorrichtung (100) um einen Bundwagen handelt.

10. Verfahren zum Ablegen eines zu einem Metallbund (200) aufgewickelten Metallbandes auf einem ersten und einem zweiten Auflagepunkt (110-1; 110-2) einer Vorrichtung (100), **gekennzeichnet durch** folgende Schritte:
- Überprüfen, ob folgende Bedingung erfüllt ist:
der Durchmesser des Metallbundes (200) kleiner als ein vorgegebener Durchmesser-Schwellenwert und die Dicke des Metallbandes größer als ein vorgegebener Dicken-Schwellenwert und die Festigkeit des Materials des Metallbandes größer als ein vorgegebener Festigkeits-Schwellenwert ist; und wenn die Bedingung erfüllt ist:
- Fingieren der Feststellung, dass das Metallbund (200) in einer instabilen Gleichgewichtslage auf den beiden in der Ausgangsposition relativ zueinander positionierten Auflagepunkten (110-1; 110-2) aufliegen würde;
- Verändern des horizontalen und/oder vertikalen Abstandes der beiden Auflagepunkte (110-1; 110-2) zueinander gegenüber deren Ausgangsposition derart, dass das Metallbund (200) in einer stabilen Gleichgewichtslage auf den beiden Auflagepunkten (110-1; 110-2) aufliegen kann; und
Ablegen des Metallbundes (200) auf den beiden Auflagepunkten (110-1; 110-2) mit geänderter Relativ-Position zueinander, sofern dies nicht bereits zuvor erfolgt war.

11. Verfahren nach Anspruch 10, **dadurch gekennzeichnet, dass** es sich bei der Vorrichtung (100) um einen Bundwagen handelt.

12. Vorrichtung mit
einem ersten und einem zweiten Auflagepunkt (110-1; 110-2) zum Ablegen eines Metallbundes (200) auf den beiden Auflagepunkten;
**dadurch gekennzeichnet,**
**dass** zumindest der erste Auflagepunkt (110-1) in seiner Position relativ zu dem zweiten Auflagepunkt (110-2) veränderbar an der Vorrichtung (100) gelagert ist;
eine Prüfeinrichtung vorgesehen ist zum Überprüfen und Feststellen, ob das Metallbund (200) in einer stabilen Gleichgewichtslage auf den beiden Auflagepunkten (110-1; 110-2) aufliegt oder liegen würde; und
**dass** eine Steuereinrichtung vorgesehen ist zum Verändern der relativen Position der beiden Auflagepunkte (110-1; 110-2) wenn eine instabile Gleichgewichtslage festgestellt wurde - zueinander derart, dass das Metallbund (200) zumindest näherungsweise in einer stabilen Gleichgewichtslage auf den beiden Auflagepunkten (110-1; 110-2) aufliegen kann.

13. Vorrichtung nach Anspruch 12,
**dadurch gekennzeichnet, dass**
die Prüfeinrichtung ausgebildet ist zu prüfen, ob folgende Bedingung erfüllt ist:
der Durchmesser des Metallbundes (200) ist kleiner als ein Durchmesser-Schwellenwert und die Dicke des Metallbandes ist größer als ein Dicken-Schwellenwert und die Festigkeit des Materials des Metallbandes ist größer als ein Festigkeits-Schwellenwert; und - wenn die Bedingung erfüllt ist - die Feststellung zu fingieren, dass das Metallbund in einer instabilen Gleichgewichtslage auf den beiden in der Ausgangsposition relativ zueinander positionierten Auflagepunkten (110-1; 110-2) aufliegen würde.

14. Vorrichtung nach Anspruch 12,
**dadurch gekennzeichnet, dass**
die Prüfeinrichtung ausgebildet ist, folgende Schritte durchzuführen, wenn das Metallbund (200) aüf den beiden in der Ausgangsposition relativ zueinander positionierten Auflagepunkten (110-1; 110-2) abgelegt ist:
Fällen des Lotes (5) von der Mitte des Metallbundes (200) hinunter zu den Auflagepunkten (110-1; 110-2);
Überprüfen, ob das Lot (5) in die Mitte zwischen den beiden Auflagepunkten (110-1; 110-2) fällt; und
Feststellen, dass das Metallbund (200) in einer instabilen Gleichgewichtslage auf den beiden Auflagepunkten (110-1; 110-2) aufliegt, wenn das Lot (5) nicht zumindest in eine vorgegebene Lot-Toleranzschwelle um die Mitte zwischen den beiden Auflagepunkten (110-1; 110-2) fällt.

15. Vorrichtung nach Anspruch 12,
**dadurch gekennzeichnet, dass**
eine Kraftmesseinrichtung (140-1) vorgesehen ist zum Messen der von dem ersten Auflagepunkt (110-1) aufgenommenen Kraftbelastung, wenn das Metallbund (200) auf den beiden Auflagepunkten (110-1; 110-2) aufliegt; und
die Prüfeinrichtung ausgebildet ist zum Vergleichen der gemessenen Kraftbelastung mit dem Gesamtgewicht des Metallbundes (200) und zum Feststellen,
dass das Metallbund in einer instabilen Gleichgewichtslage auf den beiden Auflagepunkten (110-1; 110-2) aufliegt, wenn die gemessene Kraftbelastung des ersten Auflagepunktes (110-1) um mehr als eine vorgegebene Belastungs-Toleranzschwelle von dem halben Gesamtgewicht des Metallbundes (200) abweicht.

16. Vorrichtung nach Anspruch 12,
**dadurch gekennzeichnet, dass**
zwei Kraftmesseinrichtungen (140-1; 140-2) vorgesehen sind zum Messen der von dem ersten und dem zweiten Auflagepunkt (110-1; 110-2) aufgenommenen Kraftbelastung, wenn das Metallbund (200) auf den beiden Auflagepunkten (110-1; 110-2) aufliegt; und
die Prüfeinrichtung ausgebildet ist zum Vergleichen der gemessenen Kraftbelastungen miteinander und zum Feststellen, dass das Metallbund (200) in einer instabilen Gleichgewichtslage auf den beiden Auflagepunkten (110-1; 110-2) aufliegt, wenn die gemessenen Kraftbelastungen pro Auflagepunkt um mehr als eine vorgegebene Belastungs-Toleranzschwelle voneinander abweichen.

17. Vorrichtung nach einem der Ansprüche 12 bis 16,
**dadurch gekennzeichnet, dass**
die Prüfeinrichtung weiterhin ausgebildet ist, während oder nach der Veränderung der relativen Position der beiden Auflagepunkte (110-1; 110-2) zueinander das zumindest näherungsweise Vorliegen des Zustandes des stabilen Gleichgewichtes zu überprüfen und das Vorliegen des stabilen Gleichgewichtes festzustellen, wenn das Gewicht des Metallbundes (200) nach der Positionsänderung zumindest innerhalb der vorgegebenen Belastungs-Toleranzgrenze auf die beiden Auflagepunkte (110-1; 110-2) gleichverteilt ist oder wenn nach der Positionsänderung das Lot (5) auf die Mitte zwischen die beiden Auflagepunkte (110-1; 110-2) fällt oder zumindest innerhalb der vorgegebenen Lot-Toleranzschwelle liegt.

18. Vorrichtung nach einem der Ansprüche 12 bis 17,
**dadurch gekennzeichnet, dass**
dass es sich bei der Vorrichtung (100) um einen Bundwagen handelt.

19. Bundwagen (100) mit
einem ersten (110-1) und einem zweiten (110-2) Auflagepunkt zum Ablegen eines zu einem Metallbund (200) aufgewickelten Metallbandes auf den beiden Auflagepunkten so, dass das Ende des Metallbandes (210) von dem Gewicht des Metallbundes (200) gehalten wird;
**dadurch gekennzeichnet,**
**dass** zumindest der erste Auflagepunkt (110-1) in seinem horizontalen und/oder vertikalen Abstand zu dem zweiten Auflagepunkt (110-2) veränderbar ist;
**dass** eine Prüfeinrichtung vorgesehen ist zum Überprüfen, ob folgende Bedingung erfüllt ist: der Durchmesser des Metallbundes (200) ist kleiner als ein vorgegebener Durchmesser-Schwellenwert und die Dicke des Metallbandes ist größer als ein vorgegebener Dicken-Schwellenwert und die Festigkeit des Materials des Metallbandes ist größer als ein vorgegebener Festigkeits-Schwellenwert, und zum Fingieren der Feststellung, dass das Metallbund in einer instabilen Gleichgewichtslage auf den beiden in der Ausgangsposition relativ zueinander positionierten Auflagepunkten (110-1; 110-2) aufliegen würde, wenn die Bedingung erfüllt ist; und
**dass** eine Steuereinrichtung vorgesehen ist zum Verändern des horizontalen und/oder vertikalen Abstandes der beiden Auflagepunkte (110-1; 110-2) zueinander, wenn die Bedingung erfüllt ist, derart, dass das Metallbund (200) in einer stabilen Gleichgewichtslage auf den beiden Auflagepunkten (110-1; 110-2) aufliegen kann.

## Claims

1. Method of depositing a metal strip, which is wound to form a metal coil (200), on a first support point (110-1) and a second support point (110-2) of a device (100), **characterised by** the following steps:
checking and ascertaining whether the metal coil (200) rests or would rest in an unstable equilibrium position on the two support points (110-1; 110-2) positioned relative to one another in a starting position;
if so: changing the relative position of the two support points (110-1; 110-2) with respect to one another in such a manner that the metal coil (200) rests or would rest at least approximately in a stable equilibrium position on the two support points (110-1; 110-2); and
depositing the metal coil (200) on the two support points (110-1; 110-2) with changed relative position with respect to one another insofar as this has not already taken place at the time of checking the equilibrium position.

2. Method according to claim 1, **characterised in that** the step of checking and ascertaining the equilibrium position comprises the following sub-steps:
checking whether the following condition is fulfilled:
the diameter of the metal coil (200) is smaller than a diameter threshold value and the thickness of the metal strip is greater than a thickness threshold value and the strength of the material of the metal strip is greater than a strength threshold value; and
simulating determination that the metal coil (200) would rest in an unstable equilibrium position on the two support points (110-1; 110-2), which are positioned relative to one another in the starting position, if the condition is fulfilled.

3. Method according to claim 1, **characterised in that** the step of checking and ascertaining the equilibrium position comprises the following sub-steps:
depositing the metal coil (200) on the two support points (110-1; 110-2) when these are positioned relative to one another in the starting position;
dropping the vertical (5) from the centre of the metal coil (200) down to the support points (110-1; 110-2);
checking whether the vertical (5) falls into the centre between the two support points (110-1; 110-2); and
determining that the metal coil (200) rests in an unstable equilibrium position on the two support points (110-1; 110-2) if the vertical (5) does not fall at least into a predetermined vertical tolerance threshold about the centre between the two support points.

4. Method according to claim 1, **characterised in that** the step of checking and ascertaining the equilibrium position comprises the following sub-steps:
depositing the metal coil (200) on the two support points (110-1; 110-2) when these are positioned relative to one another in the starting position;
measuring the force loading, which is accepted by the first support point (110-1), when the metal coil (200) rests on the two support points (110-1; 110-2);
comparing the measured force loading with the overall weight of the metal coil (200); and determining that the metal coil (200) rests in an unstable equilibrium position on the two support points (110-1; 110-2) when the measured force loading of the first support point (110-1) differs from half the total weight of the metal coil by more than a predetermined load tolerance threshold.

5. Method according to claim 1, **characterised in that** the step of checking and ascertaining the equilibrium position comprises the following sub-steps:
depositing the metal coil (200) on the two support points (110-1; 110-2) when these are positioned relative to one another in the starting position;
measuring the force loading, which is accepted by the first support point (110-1) and the second support point (110-2), when the metal coil (200) rests on the two support points (110-1; 110-2);
comparing the measured force loadings with one another; and
determining that the metal coil (200) rests in an unstable equilibrium position on the two support points (110-1; 110-2) when the measured force loadings per support point differ from one another by more than a predetermined load tolerance threshold.

6. Method according to any one of the preceding claims, **characterised in that** the two support points (110-1; 110-2) are arranged at the same height adjacent to one another in the starting position.

7. Method according to any one of the preceding claims, **characterised in that** the step of changing the relative position of the two support points (110-1; 110-2) with respect to one another comprises the following:
changing the horizontal and/or vertical spacing of the two support points (110-1; 110-2) from one another.

8. Method according to any one of the preceding claims, **characterised in that** during or after changing the relative position of the two support points (110-1; 110-2) with respect to one another the at least approximate presence of the state of stable equilibrium is checked; and the presence of the stable equilibrium is determined when the weight of the metal coil (200) after the positional change is uniformly distributed on the two support points (110-1; 110-2) at least within the predetermined load tolerance threshold or when after the positional change the vertical (5) falls on the centre between the two support points (110-1; 110-2) or rests at least within the predetermined vertical tolerance threshold.

9. Method according to any one of the preceding claims, **characterised in that** the device (100) is a coil carriage.

10. Method of depositing a metal strip, which is wound to form a metal coil (200), on a first support point (110-1) and a second support point (110-2) of a device (100), **characterised by** the following steps:
- checking whether the following condition is fulfilled:
the diameter of the metal coil (200) is smaller than a predetermined diameter threshold value and the thickness of the metal strip is greater than a predetermined thickness threshold value and the strength of the material of the metal strip is greater than a predetermined strength threshold value; and if the condition is fulfilled:
- simulating determination that the metal coil (200) would rest in an unstable equilibrium position on the two support points (110-1; 110-2) positioned relative to one another in the starting position;
- changing the horizontal and/or vertical spacing of the two support points (110-1; 110-2) with respect to one another relative to the starting position thereof in such a manner that the metal coil (200) can rest in a stable equilibrium position on the two support points (110-1; 110-2); and
- depositing the metal coil (200) on the two support points (110-1; 110-2) with changed relative position with respect to one another insofar as this has not already taken place beforehand.

11. Method according to claim 10, **characterised in that** the device (100) is a coil carriage.

12. Device with a first support point (110-1) and a second support point (110-2) for depositing a metal coil (200) on the two support points; **characterised in that**
at least the first support point (110-1) is mounted at the device (100) to be variable in its position relative to the second support point (110-2);
a checking device is provided for checking and ascertaining whether the metal coil (200) rests or would rest in a stable equilibrium position on the two support points (110-1; 110-2); and
a control device is provided for changing a relative position of the two support points (110-1; 110-2) - if an unstable equilibrium position was ascertained - with respect to one another in such a manner that the metal coil (200) can rest at least approximately in a stable equilibrium position on the two support points (110-1; 110-2).

13. Device according to claim 12, **characterised in that** the checking device is constructed to check whether the following condition is fulfilled:
the diameter of the metal coil (200) is smaller than a diameter threshold value and the thickness of the metal strip is greater than a thickness threshold value and the strength of the material of the metal strip is greater than a strength threshold value; and - if the condition is fulfilled - simulating determination that the metal coil would rest in an unstable equilibrium position on the two support points (110-1; 110-2) positioned relative to one another in the starting position.

14. Device according to claim 12, **characterised in that** the checking device is constructed to perform the following steps when the metal coil (200) is deposited on the two support points (110-1; 110-2) positioned relative to one another in the starting position; dropping the vertical (5) from the centre of the metal coil (200) down to the support points (110-1; 110-2);
checking whether the vertical (5) falls into the centre between the two support points (110-1; 110-2); and
determining that the metal coil (200) rests in an unstable equilibrium position on the two support points (110-1; 110-2) if the vertical (5) does not fall at least into a predetermined vertical tolerance threshold about the centre between the two support points.

15. Device according to claim 12, **characterised in that** a force measuring device (140-1) is provided for measuring the force loading, which is accepted by the first support point (110-1), when the metal coil (200) rests on the two support points (110-1; 110-2); and
the checking device is constructed for comparing the measured force loading with the total weight of the metal coil (200) and for determining that the metal coil rests in an unstable equilibrium position on the two support points (110-1; 110-2) when the measured force loading of the first support point (110-1) differs from half the total weight of the metal coil (200) by more than a predetermined load tolerance threshold.

16. Device according to claim 12, **characterised in that** two force measuring devices (140-1; 140-2) are provided for measuring the force loading, which is accepted by the first support point (110-1) and the second support point (110-2), when the metal coil (200) rests on the two support points (110-1; 110-2); and
the checking device is constructed for comparing the measured force loadings with one another and for determining that the metal coil (200) rests in an unstable equilibrium position on the two support points (110-1; 110-2) when the measured force loadings per support point differ from one another by more than a predetermined load tolerance threshold.

17. Device according to any one of claims 12 to 16, **characterised in that** the checking device is further constructed to check, during or after change of the relative position of the two support points (110-1; 110-2) with respect to one another, the at least approximate presence of the state of stable equilibrium and to determine presence of the stable equilibrium when the weight of the metal coil (200) after the positional change is uniformly distributed on the two support points (110-1; 110-2) at least within the predetermined load tolerance limit or when after the positional change the vertical (5) falls on the centre between the two support points (110-1; 110-2) or at least rests within the predetermined vertical tolerance threshold.

18. Device according to any one of claims 12 to 17, **characterised in that** the device (100) is a coil carriage.

19. Coil carriage (100) with a first support point (110-1) and a second support point (110-2) for deposit of a metal strip, which is wound to form a metal coil (200), on the two support points so that the end of the metal strip (210) is held by the weight of the metal coil (200); **characterised in that**
at least the first support point (110-1) is variable in its horizontal and/or vertical spacing from the second support point (110-2);
a checking device is provided for checking whether the following condition is fulfilled: the diameter of the metal coil (200) is smaller than a predetermined diameter threshold value and the thickness of the metal strip is greater than a predetermined thickness threshold value and the strength of the material of the metal strip is greater than a predetermined strength threshold value, and for simulating determination that the metal coil would rest in an unstable equilibrium position on the two support points (110-1; 110-2), which are positioned relative to one another in the starting position, if the condition is fulfilled; and
a control device is provided for changing the horizontal and/or vertical spacing of the two support points (110-1; 110-2) relative to one another, if the condition is fulfilled, in such a manner that the metal coil (200) can rest in a stable equilibrium position on the two support points (110-1; 110-2).

## Revendications

1. Procédé pour déposer un feuillard métallique enroulé pour obtenir une bobine de métal (200) sur un premier point d'appui (110-1) et un deuxième point d'appui (110-2) d'un dispositif (100), **caractérisé par** les étapes suivantes consistant à :
vérifier et déterminer le fait de savoir si la bobine de métal (200) repose ou reposerait dans une position d'équilibre instable sur les deux points d'appui (110-1 ; 110-2) tels qu'ils sont disposés l'un par rapport à l'autre dans une position de départ ;
si tel est le cas : modifier la position relative des deux points d'appui (110-1 ; 110-2) l'un par rapport à l'autre de telle sorte que la bobine de métal (200) repose ou reposerait sur les deux points d'appui (110-1 ; 110-2) au moins de manière approximative dans une position d'équilibre stable ; et
déposer la bobine de métal (200) sur les deux points d'appui (110-1 ; 110-2) dont la position relative a été modifiée l'un par rapport à l'autre, pour autant que ce dépôt n'ait pas déjà eu lieu lors de la vérification de la position d'équilibre.

2. Procédé selon la revendication 1,
**caractérisé en ce que**
l'étape de vérification et de détermination de la position d'équilibre comprend les étapes partielles suivantes consistant à :
vérifier le fait de savoir si la condition suivante est remplie :
le diamètre de la bobine de métal (200) est inférieur à une valeur de diamètre seuil et l'épaisseur du feuillard métallique est supérieure à une valeur d'épaisseur seuil et la résistance de la matière du feuillard métallique est supérieure à une valeur de résistance seuil ; et
simuler la détermination du fait que la bobine de métal (200) se reposerait dans une position d'équilibre instable sur les deux points d'appui (110-1 ; 110-2) tels qu'ils sont disposés l'un par rapport à l'autre dans la position de départ, lorsque la condition est remplie.

3. Procédé selon la revendication 1,
**caractérisé en ce que**
l'étape de vérification et de détermination de la position d'équilibre comprend les étapes partielles suivantes consistant à :
déposer la bobine de métal (200) sur les deux points d'appui (110-1 ; 110-2) tels qu'ils sont disposés l'un par rapport à l'autre dans la position de départ ;
abaisser la perpendiculaire (5) à partir du milieu de la bobine de métal (200) jusque sur les points d'appui (110-1 ; 110-2) ;
vérifier le fait de savoir si la perpendiculaire (5) tombe au milieu entre les deux points d'appui (110-1 ; 110-2) ; et
déterminer le fait que la bobine de métal (200) repose dans une position d'équilibre instable sur les deux points d'appui (110-1 ; 110-2) lorsque la perpendiculaire (5) ne tombe pas au moins dans un seuil prédéfini de tolérance de perpendiculaire approximativement au milieu entre les deux points d'appui.

4. Procédé selon la revendication 1,
**caractérisé en ce que**
l'étape de vérification et de détermination de la position d'équilibre comprend les étapes partielles suivantes consistant à :
déposer la bobine de métal (200) sur les deux points d'appui (110-1 ; 110-2), tels qu'ils sont disposés l'un par rapport à l'autre dans la position de départ ;
mesurer la sollicitation de force absorbée par le premier point d'appui (110-1), lorsque la bobine de métal (200) repose sur les deux points d'appui (110-1 ; 110-2) ;
comparer la sollicitation de force mesurée au poids total de la bobine de métal (200) ; et
déterminer le fait que la bobine de métal (200) repose dans une position d'équilibre instable sur les deux points d'appui (110-1 ; 110-2) lorsque la sollicitation de force mesurée du premier point d'appui (110-1) s'écarte, à concurrence d'une valeur supérieure à un seuil prédéfini de tolérance de sollicitation, de la moitié du poids total de la bobine de métal.

5. Procédé selon la revendication 1,
**caractérisé en ce que**
l'étape de vérification et de détermination de la position d'équilibre comprend les étapes partielles suivantes consistant à :
déposer la bobine de métal (200) sur les deux points d'appui (110-1 ; 110-2), tels qu'ils sont disposés l'un par rapport à l'autre dans la position de départ ;
mesurer la sollicitation de force absorbée par le premier point d'appui (110-1) et par le deuxième point d'appui (110-2), lorsque la bobine de métal (200) repose sur les deux points d'appui (110-1 ; 110-2) ;
comparer l'une par rapport à l'autre les sollicitations de force mesurées ; et
déterminer le fait que la bobine de métal (200) repose dans une position d'équilibre instable sur les deux points d'appui (110-1 ; 110-2) lorsque les sollicitations de force mesurées par point d'appui s'écartent l'une de l'autre à concurrence d'une valeur supérieure à un seuil prédéfini de tolérance de sollicitation.

6. Procédé selon l'une quelconque des revendications précédentes,
**caractérisé en ce que**
les deux points d'appui (110-1 ; 110-2) dans la position de départ sont disposés l'un à côté de l'autre à la même hauteur.

7. Procédé selon l'une quelconque des revendications précédentes,
**caractérisé en ce que**
l'étape de modification de la position relative des deux points d'appui (110-1 ; 110-2) l'un par rapport à l'autre comprend ce qui suit :
la modification de l'écart horizontal et/ou vertical réciproque entre les deux points d'appui (110-1 ; 110-2).

8. Procédé selon l'une quelconque des revendications précédentes,
**caractérisé en ce que**
pendant ou après la modification de la position relative des deux points d'appui (110-1 ; 110-2) l'un par rapport à l'autre, on vérifie la présence au moins approximative de l'état d'équilibre stable ; et
on détermine la présence de l'état d'équilibre stable lorsque le poids de la bobine de métal (200), après la modification de position, est réparti de manière égale sur les deux points d'appui (110-1 ; 110-2), au moins en deçà du seuil prédéfini de tolérance de sollicitation, ou bien lorsque, après la modification de la position, la perpendiculaire (5) tombe au milieu entre les deux points d'appui (110-1 ; 110-2) ou est située au moins en deçà du seuil prédéfini de tolérance de perpendiculaire.

9. Procédé selon l'une quelconque des revendications précédentes,
**caractérisé en ce que**
en ce qui concerne le dispositif (100), il s'agit d'un chariot pour bobine.

10. Procédé pour déposer un feuillard métallique enroulé pour obtenir une bobine de métal (200) sur un premier et un deuxième point d'appui (110-1, 110-2) d'un dispositif (100), **caractérisé par** les étapes suivantes consistant à :
vérifier le fait de savoir si la condition suivante est remplie :
le diamètre de la bobine de métal (200) est inférieur à une valeur prédéfinie de diamètre seuil et l'épaisseur du feuillard métallique est supérieure à une valeur prédéfinie d'épaisseur seuil et la résistance de la matière du feuillard métallique est supérieure à une valeur prédéfinie de résistance seuil ;
et lorsque la condition est remplie :
simuler la détermination du fait que la bobine de métal (200) reposerait dans une position d'équilibre instable sur les deux points d'appui (110-1 ; 110-2) tels qu'ils sont disposés l'un par rapport à l'autre dans la position de départ ;
modifier l'écart horizontal et/ou vertical entre les deux points d'appui (110-1 ; 110-2) par rapport à leur position de départ de telle sorte que la bobine de métal (200) puisse reposer dans une position d'équilibre stable sur les deux points d'appui (110-1 ; 110-2) ; et
déposer la bobine de métal (200) sur les deux points d'appui (110-1 ; 110-2) dont la position relative a été modifiée l'un par rapport à l'autre, pour autant que ce dépôt n'ait pas déjà eu lieu précédemment.

11. Procédé selon la revendication 10,
**caractérisé en ce que**
en ce qui concerne le dispositif (100), il s'agit d'un chariot pour bobine.

12. Dispositif comprenant :
un premier et un deuxième point d'appui (110-1, 110-2) pour le dépôt d'une bobine de métal (200) sur les deux points d'appui ;
**caractérisé**
**en ce qu'**au moins le premier point d'appui (110-1) est monté contre le dispositif (100) pour pouvoir être modifié en ce qui concerne sa position par rapport au deuxième point d'appui (110-2) ;
**en ce qu'**on prévoit un mécanisme de vérification pour la vérification et la détermination du fait de savoir si la bobine de métal (200) se trouve ou se trouverait dans une position d'équilibre stable sur les deux points d'appui (110-1 ; 110-2) ; et
**en ce qu'**on prévoit un mécanisme de commande pour la modification de la position relative des deux points d'appui (110-1 ; 110-2) - lorsqu'une position d'équilibre instable a été déterminée - de telle sorte que la bobine de métal (200) puisse reposer au moins de manière approximative dans une position d'équilibre stable sur les deux points d'appui (110-1 ; 110-2).

13. Dispositif selon la revendication 12,
**caractérisé en ce que** le mécanisme de vérification est réalisé pour vérifier le fait de savoir si la condition suivante est remplie : le diamètre de la bobine de métal (200) est inférieur à une valeur de diamètre seuil et l'épaisseur du feuillard métallique est supérieure à une valeur d'épaisseur seuil et la résistance de la matière du feuillard métallique est supérieure à une valeur de résistance seuil ; et - lorsque la condition est remplie - simuler la détermination du fait que la bobine de métal (200) reposerait dans une position d'équilibre instable sur les deux points d'appui (110-1 ; 110-2) tels qu'ils sont disposés l'un par rapport à l'autre dans la position de départ.

14. Dispositif selon la revendication 12,
**caractérisé en ce que**
le mécanisme de vérification est réalisé pour mettre en oeuvre les étapes suivantes, lorsque la bobine de métal (200) a été déposée sur les deux points d'appui (110-1 ; 110-2) tels qu'ils sont disposés l'un par rapport à l'autre dans la position de départ, consistant à :
abaisser la perpendiculaire (5) à partir du milieu de la bobine de métal (200) jusque sur les points d'appui (110-1 ; 110-2) ;
vérifier le fait de savoir si la perpendiculaire (5) tombe au milieu entre les deux points d'appui (110-1 ; 110-2) ; et
déterminer le fait que la bobine de métal (200) repose dans une position d'équilibre instable sur les deux points d'appui (110-1 ; 110-2) lorsque la perpendiculaire (5) ne tombe pas au moins dans un seuil prédéfini de tolérance de perpendiculaire approximativement au milieu entre les deux points d'appui (110-1 ; 110-2).

15. Dispositif selon la revendication 12,
**caractérisé**
**en ce qu'**on prévoit un mécanisme de mesure de force (140-1) pour mesurer la sollicitation de force absorbée par le premier point d'appui (110-1), lorsque le bobine de métal (200) repose sur les deux points d'appui (110-1 ; 110-2) ; et
le mécanisme de vérification est réalisé pour comparer la sollicitation de force mesurée au poids total de la bobine de métal (200) et pour déterminer le fait que la bobine de métal repose sur les deux points d'appui (110-1 ; 110-2) dans une position d'équilibre instable, lorsque la sollicitation de force mesurée du premier point d'appui (110-1) s'écarte, à concurrence d'une valeur supérieure à un seuil prédéfini de tolérance de sollicitation, de la moitié du poids total de la bobine de métal (200).

16. Dispositif selon la revendication 12,
**caractérisé**
**en ce qu'**on prévoit deux mécanismes de mesures de force (140-1, 140-2) pour mesurer la sollicitation de force absorbée par le premier point d'appui (110-1) et par le deuxième point d'appui (110-2), lorsque la bobine de métal (200) repose sur les deux points d'appui (110-1 ; 110-2) ; et
le mécanisme de vérification est réalisé pour comparer l'une à l'autre les sollicitations de force mesurées et pour déterminer le fait que la bobine de métal (200) repose dans une position d'équilibre instable sur les deux points d'appui (110-1 ; 110-2) lorsque les sollicitations de force mesurées par point d'appui s'écartent l'une de l'autre à concurrence d'une valeur supérieure à un seuil prédéfini de tolérance de sollicitation.

17. Dispositif selon l'une quelconque des revendications 12 à 16,
**caractérisé en ce que**
le mécanisme de vérification est en outre réalisé pour vérifier, pendant ou après la modification de la position relative des deux points d'appui (110-1 ; 110-2) l'un par rapport à l'autre, la présence au moins approximative de l'état d'équilibre stable ; et pour déterminer la présence de l'état d'équilibre stable lorsque le poids de la bobine de métal (200), après la modification de position, est réparti de manière égale sur les deux points d'appui (110-1 ; 110-2), au moins en deçà de la limite prédéfinie de tolérance de sollicitation, ou bien lorsque, après la modification de la position, la perpendiculaire (5) tombe au milieu entre les deux points d'appui (110-1 ; 110-2) ou au moins en deçà du seuil prédéfini de tolérance de perpendiculaire.

18. Dispositif selon l'une quelconque des revendications 12 à 17,
**caractérisé en ce que**
en ce qui concerne le dispositif (100), il s'agit d'un chariot pour bobine.

19. Chariot pour bobine (100) comprenant
un premier point d'appui (110-1) et un deuxième point d'appui (110-2) pour le dépôt un feuillard métallique enroulé pour obtenir une bobine de métal (200) sur les deux points d'appui, de telle sorte que l'extrémité du feuillard métallique (210) est retenue par le poids de la bobine de métal (200) ;
**caractérisé**
**en ce qu'**au moins le premier point d'appui (110-1) peut être modifié en ce qui concerne son écart horizontal et/ou vertical par rapport au deuxième point d'appui (110-2) ;
**en ce qu'**on prévoit un mécanisme de vérification pour vérifier le fait de savoir si la condition suivante est remplie :
le diamètre de la bobine de métal (200) est inférieur à une valeur prédéfinie de diamètre seuil et l'épaisseur du feuillard métallique est supérieure à une valeur prédéfinie d'épaisseur seuil et la résistance de la matière du feuillard métallique est supérieure à une valeur prédéfinie de résistance seuil ; et pour simuler la détermination du fait que la bobine de métal reposerait dans une position d'équilibre instable sur les deux points d'appui (110-1 ; 110-2) tels qu'ils sont disposés l'un par rapport à l'autre dans la position de départ, lorsque la condition est remplie ; et
**en ce qu'**on prévoit un mécanisme de commande pour la modification de l'écart horizontal et/ou vertical des deux points d'appui (110-1 ; 110-2) l'un par rapport à l'autre, lorsque la condition est remplie, de telle sorte que la bobine de métal (200) puisse reposer dans une position d'équilibre stable sur les deux points d'appui (110-1 ; 110-2).
